(19) **Europäisches Patentamt / European Patent Office / Office européen des brevets**

(11) **EP 2 194 702 A1**

(12) **DEMANDE DE BREVET EUROPEEN**

(43) Date de publication:
09.06.2010 Bulletin 2010/23

(51) Int Cl.:
*H04N 1/17* (2006.01)

(21) Numéro de dépôt: 09177660.9

(22) Date de dépôt: 01.12.2009

(84) Etats contractants désignés:
AT BE BG CH CY CZ DE DK EE ES FI FR GB GR HR HU IE IS IT LI LT LU LV MC MK MT NL NO PL PT RO SE SI SK SM TR
Etats d'extension désignés:
AL BA RS

(30) Priorité: 04.12.2008 FR 0858268

(71) Demandeur: SAGEM COMMUNICATIONS SAS
92500 Rueil Malmaison (FR)

(72) Inventeur: Imbert, Nicolas
78400, CHATOU (FR)

(74) Mandataire: Callon de Lamarck, Jean-Robert et al
Cabinet Regimbeau
20 rue de Chazelles
75847 Paris cedex 17 (FR)

(54) **Module optique de scanner à deux capteurs optiques, scanner et procédé de commande correspondant**

(57) Module optique (1) de scanner, apte à être associé à un élément (30) de commande et de traitement de capteur optique, ledit module (1) optique étant **caractérisé en ce qu'**il comporte au moins deux capteurs optiques (120, 122), chaque capteur optique étant apte à visualiser une zone différente du document, et envoyer une information audit élément (30) de commande et de traitement,

ledit élément (30) de commande et de traitement étant apte, en retour, à envoyer une instruction à au moins un capteur en fonction de l'information reçue.

## FIG. 3

**Description**

L'invention concerne un scanner, et un procédé de commande d'un tel scanner.

ETAT DE L'ART

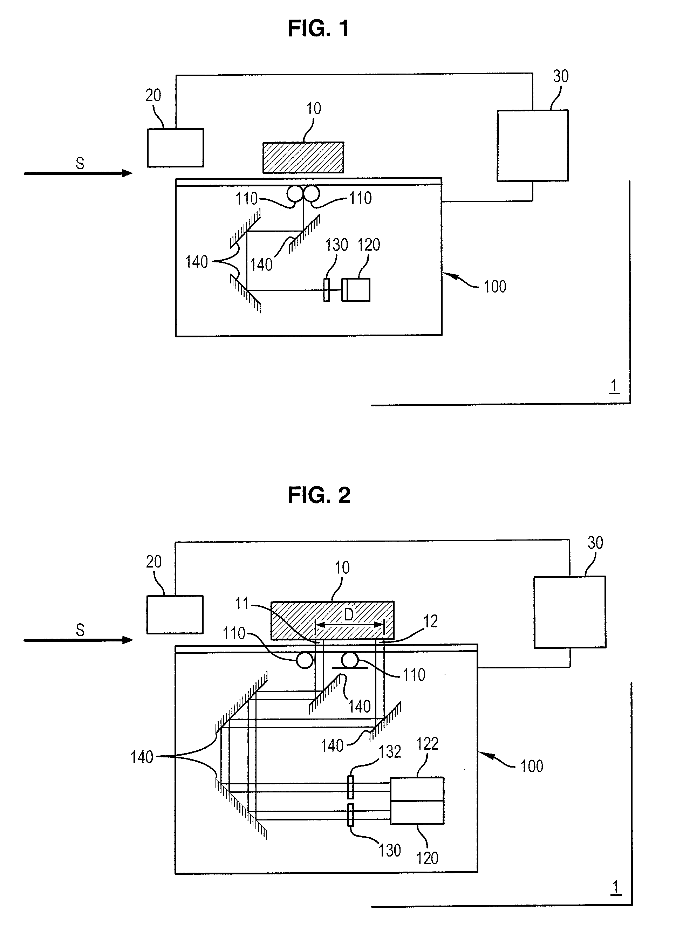

La figure 1 représente schématiquement un exemple connu d'un scanner comportant un module optique 1.
Le module optique 1 comporte un capteur optique 120 apte à acquérir des informations concernant un document à scanner 10, des sources de lumière 110 et des miroirs de repliement de chemin optique 140, associés au capteur 120. Le capteur optique est, sur la figure 1, de type CCD.

Le scanner comporte des moyens 20 permettant le déplacement relatif du module optique 1 par rapport au document 10 à scanner. Les moyens 20 sont soit du type chariot pour les scanners à plat, soit des roulettes associées à un chargeur pour les scanners à chargement.
Le sens de déplacement relatif du module optique 1 par rapport au document à scanner 10 est représenté par la flèche S.

Un élément de commande et de traitement 30 interagit avec le module optique 1 et les moyens 20 de déplacement. L'élément de commande et de traitement 30 comporte les moyens classiques ; un espace mémoire, un microprocesseur pour exécuter des logiciels de commande et de traitement.

Les scanners, qu'il s'agisse de scanners à plat ou de scanners à chargement papier, disposent souvent de plusieurs modes de scan différents fonctionnant à des vitesses différentes. Les vitesses observées les plus faibles sont le résultat d'une limitation en performance de l'ensemble capteur optique/élément de commande et de traitement de l'image, et non des moyens permettant le déplacement relatif du module optique par rapport au document à scanner.

FR 2 900 018 présente par ailleurs un scanner mettant à profit la connaissance de la nature du document; noir et blanc ou couleur, lors du scan, afin d'adapter la commande du scanner, et en particulier la vitesse du scan, afin d'augmenter la performance globale du scanner.

Dans FR 2 900 018, on utilise un échantillonnage périodique de la nature du document, noir et blanc ou couleur, avec en outre un mode de réalisation possible permettant un retour en arrière du chariot lorsqu'un changement de nature du document est observé.

Toutefois, la méthode de FR 2 900 018 présente des inconvénients ;

- les retours lorsque la nature du document change entre deux échantillons successifs induisent des ralentissements ;
- il est impossible de bénéficier de cette méthode lorsque le chariot n'est pas en mesure de retourner en arrière ;
- la méthode ne correspond pas à une analyse systématique de toutes les lignes du document à scanner, mais à un échantillonnage, ce qui peut amener à faire une erreur sur la nature du document, et à perdre de l'information. En effet, si le document scanné comporte des lignes de couleur entre les deux échantillonnages, qui se font eux sur des lignes noir et blanc, le scanner considèrera à tord que toute la zone était entre les deux échantillons en noir et blanc, et ceci quelle que soit la fréquence d'échantillonnage.

US 5 568 270 divulgue un scanner comportant deux capteurs optiques effectuant une prévisualisation et un procédé de commande d'un tel scanner. US 5 568 270 ne permet cependant pas de faire varier la vitesse de visualisation selon plusieurs modes déterminés lors de la prévisualisation.

US 2006/061835 divulgue un scanner comportant deux capteurs optiques et permettant de faire varier la qualité de visualisation d'un document en fonction de son caractère transparent ou opaque, ledit caractère étant indiqué au scanner par un utilisateur.

US 5 483 359 divulgue un scanner dont la vitesse de déplacement corrige les décalages dus à la géométrie des capteurs optiques.

PRESENTATION DE L'INVENTION

L'invention propose de pallier au moins un de ces inconvénients.

On propose selon l'invention un scanner selon la revendication 1.

L'invention est avantageusement complétée par l'une des caractéristiques des revendications 2 à 7.

L'invention concerne également un procédé de commande selon la revendication 8.

L'invention présente de nombreux avantages.

L'invention permet la mise en oeuvre d'un module comportant un capteur optique secondaire additionnel, de type CIS ou CCD, de faible coût car il peut être de basse résolution, permettant de s'affranchir complètement des inconvénients cités précédemment, tout en permettant de bénéficier des mêmes avantages, à savoir l'augmentation des performances du scanner et la réduction de la mémoire nécessaire à son utilisation.

Le capteur optique secondaire est avantageusement extrêmement sensible bien que de basse résolution, afin de limiter son coût sans nuire à sa fonction. En effet, même si le capteur optique secondaire entre facilement en saturation, cela ne pose pas de problème, dans la mesure où l'on cherche à déterminer la présence de signal noir et blanc ou couleur, et non pas l'amplitude exacte du signal. La sensibilité est cependant importante pour ne pas confondre un signal faible avec un simple bruit.

L'invention permet d'améliorer de façon importante l'objet de FR 2 900 018, en introduisant la détection de l'absence de signal utile (l'absence de signal utile correspond à une zone de blanc -- lignes vierges -- sur le document), ce qui permet de diminuer le nombre d'informations acquises par le capteur et par l'élément de commande et de traitement, et de solliciter de façon plus efficace les moyens de déplacement relatif (vitesse optimale de déplacement par exemple quand cela est possible), et ainsi d'améliorer les performances.

En noir et blanc, le capteur optique peut fonctionner plus rapidement qu'en couleur, et nécessite moins de mémoire au niveau du traitement des signaux obtenus correspondant aux lignes.

Dans les lignes vierges du document, ce qui est souvent le cas pour les marges, les espaces entre titres ou tableaux et les interlignes dans les documents de type texte, le capteur optique n'a plus besoin d'être sollicité, et les moyens permettant le déplacement relatif du module optique par rapport au document à scanner peuvent être poussés à leur limite (vitesse maximale) afin de passer le plus rapidement possible cette zone sans informations. Le scan du document est donc plus rapide que dans l'art antérieur.

Le capteur optique secondaire visualise une seconde zone correspondant à une seconde ligne du document à visualiser, et le capteur optique principal visualise une première zone correspondant à une première ligne du document à visualiser. La première zone et la seconde zone du document sont séparées par une distance appelée « distance d'avance de prévisualisation », ou distance D. Cette distance est utilisée pour permettre à l'élément de commande et de traitement de déterminer à l'avance la nature du document, pour l'instant où le capteur principal atteindra la seconde ligne du document à visualiser. Le capteur optique secondaire en amont d'une distance D permet à l'élément de commande et de traitement de savoir si le document comporte une ligne de nature noir et blanc, ou couleur, ou est vierge.

L'élément de commande et de traitement peut alors anticiper une accélération sur cette ligne du document, soit en augmentant la vitesse du défilement papier pour un scanner à défilement, soit en accélérant le déplacement du module pour un scanner à plat. Le capteur secondaire continue bien entendu de visualiser le document pour permettre à l'élément de commande et de traitement d'anticiper un changement de mode de défilement du scanner.

Le procédé de scan correspond à une analyse systématique de toutes les lignes du document à scanner. Chaque ligne du document est visualisée à la fois par le capteur optique secondaire et par le capteur optique principal, à des instants différents séparés temporellement en fonction de la vitesse de déplacement relatif du module par rapport au document. On ne fait donc aucune erreur sur la nature du document, et on ne perd pas d'information.

Cette visualisation ligne par ligne lors du scan d'un document permet d'éviter les retours lorsque la nature du document change entre deux échantillons successifs, et évitent ainsi les ralentissements.

Le procédé peut donc également être utilisé sur les scanners où le retour en arrière est impossible.

PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :

- La figure 1, déjà commentée, présente un module optique conventionnel avec un capteur optique CCD ;
- La figure 2 présente un module optique avec comme capteur optique principal un capteur CCD, et comme capteur optique secondaire un capteur CCD ;
- La figure 3 présente un module optique avec comme capteur optique principal un capteur CCD, et comme capteur optique secondaire un capteur CIS ;
- La figure 4 présente un module optique avec comme capteur optique principal un capteur CIS, et comme capteur optique secondaire un capteur CIS ;
- La figure 5 présente l'organigramme correspondant aux étapes principales dans le cas où l'on scanne un document en couleur ; et
- La figure 6 présente l'organigramme correspondant aux étapes principales dans le cas où l'on scanne un document en noir et blanc.
- les figures 7, 8 et 9 illustrent des étapes des organigrammes des figures 5 et 6.

DESCRIPTION DETAILLEE

La figure 2 représente schématiquement un mode de réalisation possible d'un aspect de l'invention, à savoir un module optique 1 d'un scanner 1.

Le module 1 comprend un capteur optique principal 120 de type CCD, et un capteur optique secondaire 122 de type CCD.

Ces capteurs 120 et 122 sont associés respectivement aux lentilles optiques 130 et 132, et aux miroirs de repliement de chemin optique 140.

Des sources de lumière 110 permettent l'éclairage du document à scanner 10, à travers une vitre, et un miroir de cache 142 permet de rediriger la lumière vers le document à scanner 10.

Un élément 30 de commande et de traitement du scanner interagit avec le module optique 1.

L'élément 30 interagit également avec des moyens 20, appartenant également au scanner et permettant le déplacement relatif du module optique 1 par rapport au document 10 à scanner.

Classiquement, les moyens 20 sont du type chariot pour les scanners à plat, et/ou des roulettes pour les scanners à chargement.

Le sens de déplacement relatif du module optique 1 par rapport au document à scanner 10 est représenté par la flèche S.

On distingue deux zones 11 et 12. Une première zone 11 correspond à la zone apte à être visualisée par le capteur optique principal 120, et une seconde zone 12 correspond à la ligne apte à être visualisée par le capteur optique secondaire 122.

Ces zones 11 et 12 correspondent à des lignes du document à scanner 10.

On a représenté également sur la figure 2 la distance d'avance de prévisualisation D, à savoir la distance séparant la première zone 11 et la seconde zone 12. Cette distance D est décrite dans la suite de la description.

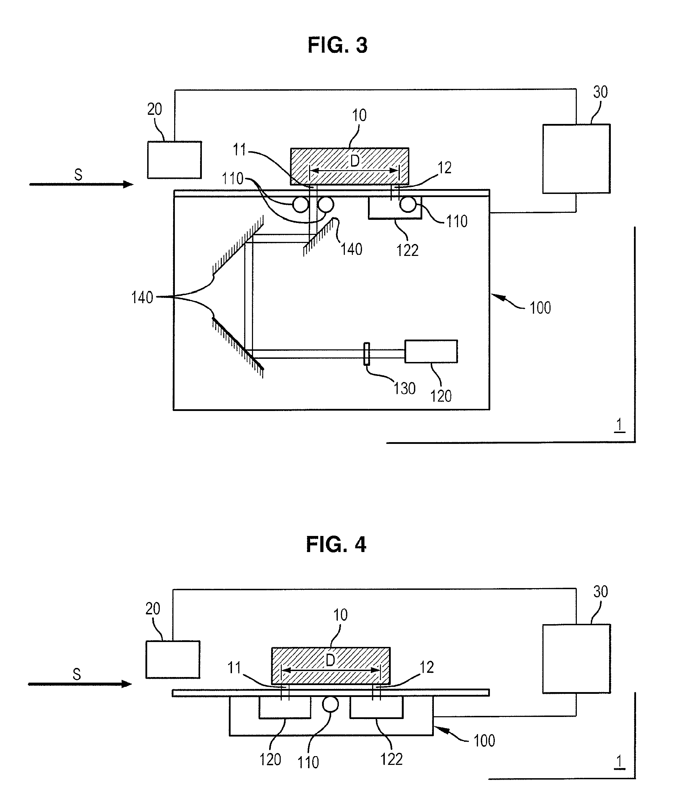

La figure 3 représente schématiquement un autre mode de réalisation de l'invention, à savoir un module optique 1 d'un scanner, comprenant un capteur optique principal 120 de type CCD, et un capteur optique secondaire 122 de type CIS.

Le capteur optique principal 120 est associé aux miroirs 140 de repliement de chemin optique, et à la lentille optique 130.

Comme précédemment, des sources de lumière 110 permettent l'éclairage du document à scanner 10 au niveau de la première zone 11 du capteur optique principal 120.

Le capteur optique secondaire 122 est positionné directement accolé au document à scanner 10, car ce type de capteur CIS comprend son propre système d'éclairage, et doit être directement accolé au document à acquérir.

Comme précédemment également, un élément 30 de commande et de traitement du scanner interagit avec le module optique 1, et des moyens 20 de déplacement relatif du module optique 1 par rapport au document 10 à scanner.

On représente également la seconde zone 12 correspondant à la ligne 102 du document 10 apte à être visualisée par le capteur optique secondaire 122, et la première zone 11 correspondant à la première ligne 101 du document 10, apte à être visualisée par le capteur optique principal 120. Les zones 11 et 12 sont séparées de la distance D.

La figure 4 représente schématiquement un autre mode de réalisation de l'invention, à savoir un module optique 1 d'un scanner 1, comprenant un capteur optique principal 120 de type CIS, et un capteur optique secondaire 122 de type CIS.

Une source d'éclairage 110 est commune aux deux capteurs 120 et 122, et située entre les deux capteurs.

Les deux capteurs CIS 120 et 122 sont séparés par la distance D.

L'élément 30 de commande et de traitement interagit avec le module optique 1 et les moyens 20 permettant le déplacement relatif du module optique 1 par rapport au document 10 à scanner.

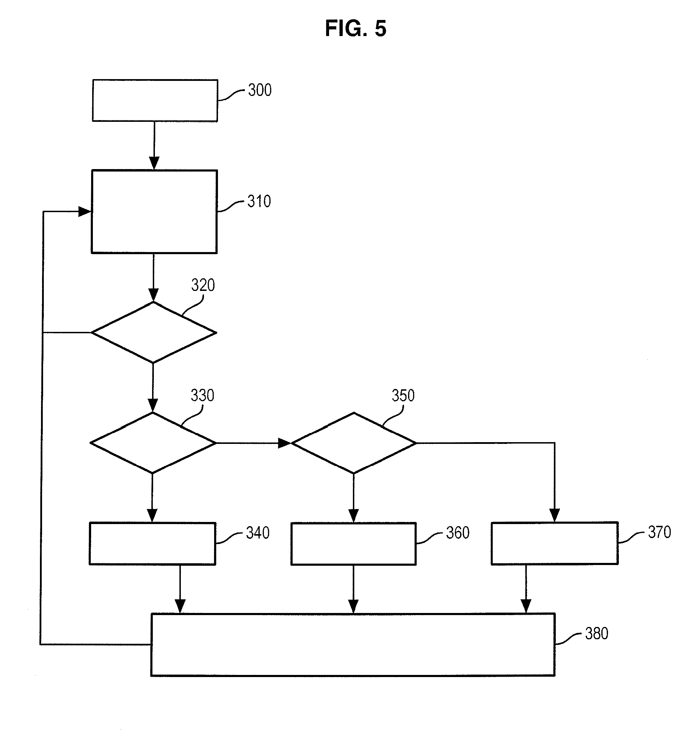

La figure 5 présente l'organigramme correspondant aux étapes principales d'un procédé possible selon l'invention dans le cas où l'on scanne un document 10 selon un mode couleur choisi par un utilisateur.

L'étape 300 correspond à une initialisation du scanner dans le mode couleur.

Après l'étape d'initialisation, le procédé comporte une étape 310 d'acquisition de la seconde ligne 102 du document 10 à scanner située au niveau de la seconde zone 12 par le capteur optique secondaire 122, et de la première ligne 101 du document 10 à scanner située au niveau de la première zone 11 par le capteur optique principal 120.

La première zone 11 est située en amont à la distance D de la seconde zone 12, D étant décrite par la suite.

Lors de cette étape 310, il y a également un envoi d'une première information à l'élément 30 par le capteur optique secondaire 122, l'information correspondant à une nature de la seconde ligne 102 (à savoir noir et blanc, couleur ou pas de signal utile - la ligne est vierge).

Il y a également création d'une seconde information comprenant la nature de la première ligne 101 (à savoir noir et blanc, couleur ou pas de signal utile), l'information provenant soit du capteur optique principal 120 et étant envoyée à l'élément 30, soit de l'information stockée par l'élément 30 concernant la nature de la première ligne (101), qui a été envoyée à l'élément 30 par le capteur optique secondaire lors de l'itération précédente du procédé, lorsque la première ligne 101 était au niveau du capteur optique secondaire 122.

Lors de l'étape 310, il y a également un déplacement du module optique 1 par rapport au document 10, à la vitesse de déplacement relatif correspondant au mode de visualisation couleur choisi par l'utilisateur lors de l'étape d'initialisation.

L'étape 320 correspond à la comparaison, par l'élément 30, de la première information et de la seconde information, c'est-à-dire une comparaison entre la nature (noir et blanc ou couleur ou vierge) des deux lignes 101 et 102.

Si les informations sont de même nature, on passe à l'étape 310.

Si les informations sont de natures différentes, on passe à l'étape 330.

L'étape 330 correspond à la détection, par l'élément 30, de l'existence ou non du signal utile amont, correspondant à la seconde ligne 102 visualisée par le capteur optique secondaire 122.

Dans le cas où il n'y a pas de signal amont lors de l'étape 330 (la première information indique alors que la nature de la première ligne est l'absence de signal), on passe à l'étape 340 qui détermine le prochain mode de visualisation du capteur optique principal. La nature ici étant l'absence de signal, la vitesse de déplacement relatif est maximale.

Dans le cas où lors de l'étape 330 la première information indique que la nature de la seconde ligne 102 n'est pas l'absence de signal, on passe à l'étape 350, qui détermine si la première information indique que la nature de la seconde ligne 102 est couleur ou non.

Si la nature de la seconde ligne 102 n'est pas couleur, on passe à l'étape 360, et si la nature de la seconde ligne 102 est couleur, on passe à l'étape 370.

Lors de l'étape 360, on détermine la vitesse de déplacement relatif noir et blanc (intermédiaire) correspondant à la nature noir et blanc de la seconde ligne 102, et lors de l'étape 370, on détermine la vitesse de déplacement relatif couleur (minimale) correspondant à la nature couleur.

L'étape 380 correspond à l'envoi d'une instruction au capteur optique principal 120, l'instruction étant issue de l'élément 30, pour la visualisation de la seconde ligne 102 au moment où la seconde ligne 102 passe au niveau de la première zone de visualisation 11 du capteur optique principal 120 selon un mode de visualisation déterminé lors des étapes 340, 360 et 370, et correspondant à la nature de la seconde ligne 102 (vierge pour 340, noir et blanc pour 360 ou couleur pour 370). Le capteur principal visualise la seconde ligne 102 selon un mode couleur ou noir et blanc, en fonction de la nature de la seconde ligne 102, et ne visualise pas la seconde ligne 102 si cette ligne est vierge.

L'étape 380 comporte également un envoi d'une commande aux moyens 20 de déplacement, la commande étant issue de l'élément 30, pour la visualisation par le capteur optique principal de la seconde ligne 102 avec une vitesse de déplacement relatif correspondant à la nature de la seconde ligne 102 (vierge, noir et blanc ou couleur) et déterminée lors des étapes 340, 360 et 370.

La visualisation par le capteur principal s'effectue avec la vitesse noir et blanc si la seconde ligne 102 est en noir et blanc, et avec la vitesse couleur si la seconde ligne 102 est en couleur.

On comprend que plus la vitesse de déplacement relatif est importante d'une part, et plus le temps de latence du changement de mode de visualisation du capteur optique principal (à savoir le temps de prise en compte de l'instruction pour la visualisation de ladite seconde ligne 102 et du changement de mode entrainé par cette instruction) est long d'autre part, plus la distance D nécessitera d'être grande.

Cette distance D doit donc au moins vérifier la condition

$$D > Vmod / tc$$

Avec :

tc = temps de latence du changement de mode du capteur optique principal; et
Vmod = vitesse du déplacement relatif du module optique par rapport au document.

On retourne ensuite à l'étape 310 et le procédé est réitéré jusqu'à la fin du scan du document 10.

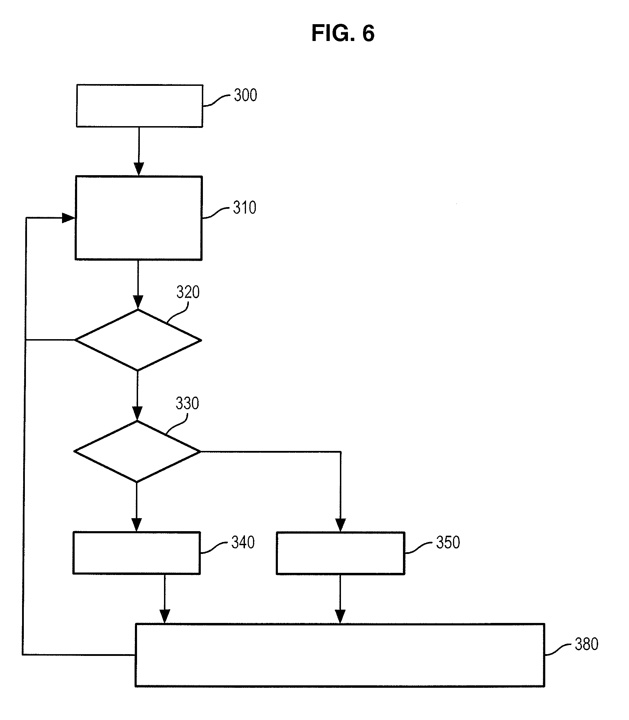

La figure 6 présente l'organigramme correspondant aux étapes principales d'un procédé possible selon l'invention dans le cas où l'on scanne un document 10 selon un mode noir et blanc choisi par un utilisateur.

L'étape 300 correspond à une initialisation du scanner dans le mode noir et blanc.

Après l'étape d'initialisation, le procédé comporte une étape 310 d'acquisition de la seconde ligne 102 du document 10 à scanner, correspondant à la seconde zone de visualisation 12 par le capteur optique secondaire 122, et de la première ligne 101 du document 10 à scanner, correspondant à la première zone de visualisation 11 par le capteur optique principal 120.

La première zone 11 est située en amont de la seconde zone 12, à la distance D, comme décrit précédemment.

Lors de cette étape 310, il y a également un envoi d'une première information à l'élément 30 par le capteur optique secondaire 122, l'information correspondant à la nature de la seconde ligne 102 (à savoir noir et blanc, couleur ou vierge).

Il y a également création d'une seconde information comprenant la nature de la première ligne 101 (à savoir noir et blanc, couleur ou pas de signal utile), l'information provenant soit du capteur optique principal 120 et étant envoyée à l'élément 30, soit de l'information stockée par l'élément 30 concernant la nature de la première ligne (101), qui a été envoyée à l'élément 30 par le capteur optique secondaire lors de l'itération précédente du procédé, lorsque la première ligne 101 était au niveau du capteur optique secondaire 122.

Lors de l'étape 310, il y a également un déplacement du module optique 1 par rapport au document 10 à la vitesse de déplacement relatif correspondant au mode de visualisation noir et blanc choisi par l'utilisateur.

L'étape 320 correspond à la comparaison par l'élément 30 de la première information et de la seconde information, c'est-à-dire une comparaison entre la nature (noir et blanc ou couleur ou vierge) des deux lignes 101 et 102.

Si les informations sont de même nature, on passe à l'étape 310.

Si les informations sont de natures différentes, on passe à l'étape 330.

L'étape 330 correspond à la détection de l'existence ou non du signal utile amont au niveau de la seconde zone 12, correspondant à une seconde ligne 102 du document à scanner 10, visualisée par le capteur optique secondaire 122.

Dans le cas où il n'y a pas de signal amont lors de l'étape 330 (la première information indique alors que la nature de la seconde ligne 102 est l'absence de signal), on passe à l'étape 340 qui détermine le prochain mode de visualisation du capteur optique principal 120. La nature ici étant l'absence de signal, la vitesse de déplacement relatif est maximale.

Dans le cas où lors de l'étape 330 la première information indique que la nature de la seconde ligne 102 n'est pas l'absence de signal (noir et blanc ou couleur), on passe à l'étape 350, qui détermine le prochain mode de visualisation, à savoir le mode noir et blanc choisi par l'utilisateur. La vitesse de déplacement relatif noir et blanc (intermédiaire) correspondant à la nature noir et blanc de la seconde ligne 102 est donc déterminée.

Après l'étape 340 ou 350 de la figure 6, on passe à l'étape 380.

L'étape 380 correspond à l'envoi d'une instruction au capteur optique principal 120, l'instruction étant issue de l'élément 30, pour la visualisation de la seconde ligne 102 au moment où la seconde ligne 102 passe au niveau du capteur optique principal 120 selon un mode de visualisation correspondant au mode noir et blanc choisi lors de l'initialisation (lorsque la ligne est de nature autre que l'absence de signal - étape 350) ou pas de visualisation lorsque la ligne est vierge (étape 340).

L'étape 380 comporte également un envoi d'une commande aux moyens 20 de déplacement, la commande étant issue de l'élément 30, pour la visualisation par le capteur optique principal 120 de la seconde ligne 102 avec une vitesse de déplacement relatif correspondant à la nature de la seconde ligne 102 (vitesse noir et blanc - déterminée à l'étape 350 - ou vitesse maximale - déterminée à l'étape 340).

On retourne ensuite à l'étape 310 et le procédé est réitéré jusqu'à la fin du scan du document 10.

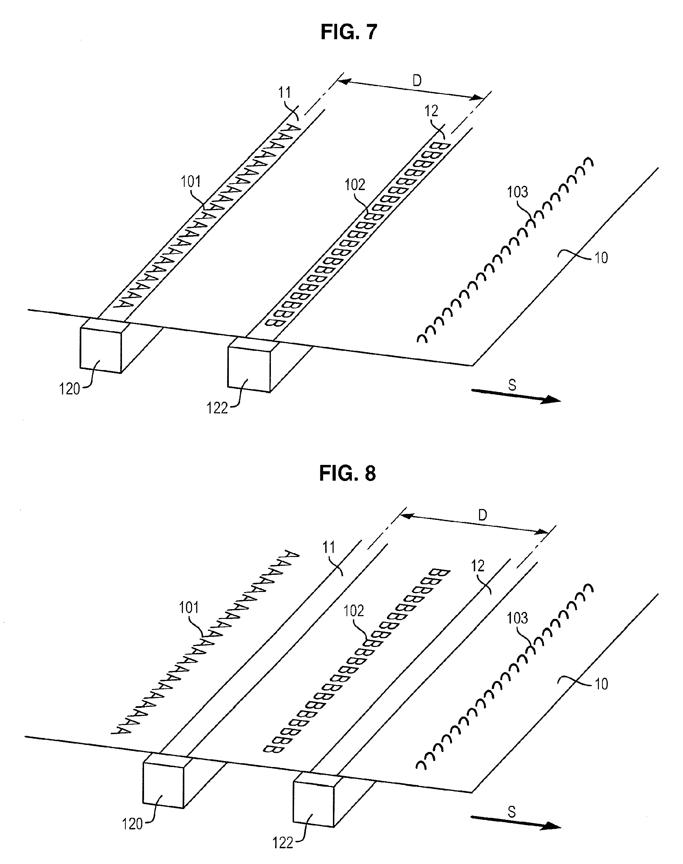

Les figures 7, 8 et 9 illustrent les étapes des figures précédentes.

La figure 7 représente le document 10, la zone de visualisation 12 du capteur optique principal 120, correspondant à la première ligne 101 du document 10, la zone de visualisation 11 du capteur optique secondaire 122, correspondant à la seconde ligne 102 du document 10.

Le sens de déplacement relatif du module optique 1 par rapport au document à scanner 10 est représenté par la flèche S.

La distance d'avance de prévisualisation D séparant les zones de visualisation 11 et 12 est également représentée.

Cette figure correspond à l'étape 310 du procédé de la figure 6.

La figure 8 représente l'étape transitoire entre le scan de deux lignes du document 10.

On voit le déplacement des capteurs 120 et 122 par rapport au document à scanner 10.

Durant cette étape, le capteur optique principal 120 effectue l'éventuel changement de mode découlant de l'étape illustrée par la figure 7.

Le sens de déplacement relatif du module optique 1 par rapport au document à scanner 10 est représenté par la flèche S.

La distance d'avance de prévisualisation D séparant les zones de visualisation 11 et 12 est également représentée.

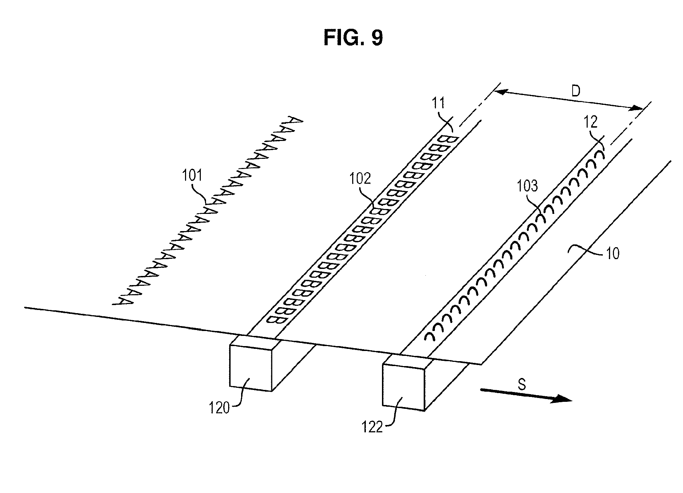

La figure 9 représente l'étape 310 suivante ; la zone 11 de visualisation du capteur optique principal 120 correspond ici à la ligne 102 du document à scanner 10, qui était précédemment au niveau de la zone 12 de visualisation du capteur optique secondaire 122. Le scan de la ligne 102 du document à scanner 10 se fait selon des paramètres calculés à partir de l'état représenté sur la figure 7. Simultanément, le capteur optique secondaire 122 visualise une nouvelle ligne 103 du document à scanner 10, qui correspond à sa zone de visualisation 12, et pour laquelle le même procédé que celui décrit pour la seconde ligne 102 sera appliqué.

Le sens de déplacement relatif du module optique 1 par rapport au document à scanner 10 est représenté par la flèche S.

La distance d'avance de prévisualisation D séparant les zones de visualisation 11 et 12 est également représentée.

## Revendications

1. Scanner comportant

   - un élément (30) de commande et de traitement,
   - un module optique (1) relié à l'élément (30) et comportant un capteur optique secondaire (122) et un capteur optique principal (120), et
   - des moyens (20) reliés à l'élément (30) et permettant le déplacement relatif du module optique (1) par rapport au document (10) à scanner, scanner dans lequel

      ledit capteur optique principal (120)

         est apte à visualiser une première zone (11) correspondant à une première ligne (101) du document (10), selon un mode absence de signal, ou un mode noir et blanc, ou un mode couleur, et

      ledit capteur optique secondaire (122)

         est apte à visualiser une seconde zone (12) correspondant à une seconde ligne (102) du document (10), ladite zone (12) de visualisation du capteur optique secondaire (122) étant située en amont de la zone (11) de visualisation du capteur optique principal (120) et est apte à envoyer une information audit élément (30) concernant la nature absence de signal, ou noir et blanc, ou couleur de ladite seconde ligne (102), et

      ledit capteur optique principal (120)

         étant apte à prendre en compte, pour la visualisation de ladite seconde ligne (102) selon un mode absence de signal, ou noir et blanc, ou couleur, lors d'un scan du document (10) par déplacement relatif du module (1) par rapport au document (10), une instruction de visualisation issue dudit élément (30) de commande et de traitement et notamment fonction de ladite information concernant la nature de ladite seconde ligne (102),

l'élément (30) de commande et de traitement étant en outre adapté pour envoyer une commande aux moyens (20) de déplacement en

fonction de l'information reçue concernant la nature absence de signal, ou noir et blanc, ou couleur de ladite seconde ligne (102) ; et

les moyens (20) de déplacement étant adaptés pour que

   - la vitesse de déplacement relatif soit maximale lorsque la nature de la seconde ligne (102) est l'absence de signal (340),
   - la vitesse de déplacement relatif soit intermédiaire lorsque la nature de la seconde ligne (102) est noir et blanc (360), et
   - la vitesse de déplacement relatif soit minimale lorsque la nature de la seconde ligne (102) est couleur (370).

2. Scanner (1) selon la revendication 1, dans lequel la seconde zone (12) apte à être visualisée par ledit capteur optique secondaire (122) et la première zone (11) apte à être visualisée par ledit capteur optique principal (120) sont espacées d'une distance D, vérifiant la relation

$$D > Vmod \: / \: tc$$

Avec :

D = distance d'avance de prévisualisation, à savoir la distance séparant la première zone (11) et la seconde zone (12) du document (10);
tc = temps de latence du changement de mode du capteur optique principal (120), à savoir le temps à la fois de prise en compte, par le capteur optique principal (120), de l'instruction de mode de visualisation de ladite première zone (11) et d'un éventuel changement de mode de visualisation entraîné par cette instruction; et
Vmod = vitesse du déplacement relatif du module (1) optique par rapport au document (10).

3. Scanner (1) selon l'une des revendications 1 ou 2, comportant au moins une source de lumière (110) apte à éclairer la première zone (12) pour sa visualisation par le capteur optique principal (120) et au moins une source de lumière (110) apte à éclairer la seconde zone (11) pour sa visualisation par le capteur optique secondaire (122).

4. Scanner (1) selon l'une des revendications 1 à 3, dans lequel le capteur optique principal (120) est un capteur optique de type CIS ou CCD, et dans lequel le capteur optique secondaire (122) est un capteur optique de type CIS ou CCD, de grande sensibilité.

5. Scanner selon la revendication 4, dans lequel le capteur optique secondaire (122) est de plus basse résolution que le capteur optique principal (120).

6. Scanner (1) selon l'une des revendications 1 à 3, dans lequel le capteur optique principal (120) et le capteur optique secondaire (122) sont des capteurs optiques de type CIS, le capteur optique secondaire (122) étant de grande sensibilité, la première zone (11) et la seconde zone (12) étant éclairées par une source (110) d'éclairage commune.

7. Scanner selon la revendication 6, dans lequel le capteur optique secondaire (122) est de plus basse résolution que le capteur optique principal (120).

8. Procédé de commande d'un scanner, le scanner comportant

   - un élément (30) de commande et de traitement,
   - un module optique (1) relié à l'élément et comportant un capteur optique secondaire (122) et un capteur optique principal (120), et
   - des moyens (20) reliés à l'élément (30) et permettant le déplacement relatif du module optique (1) par rapport au document (10) à scanner ;
ledit procédé comportant les étapes de :

   - visualisation (310) d'une seconde zone (11) correspondant à une seconde ligne (102) d'un document (10) à scanner par le capteur optique secondaire (122) et d'une première zone (12) correspondant à une première ligne (101) du document (10) à scanner par le capteur optique principal (120), la première zone (11) étant située en amont de la seconde zone (12),
   - envoi (310) d'une première information à l'élément (30) par le capteur optique secondaire (122), l'information correspondant à une nature de la seconde ligne (102), la nature de la seconde ligne étant l'absence de signal, ou noir et blanc, ou couleur, et

- création (310) d'une seconde information comprenant la nature de la première ligne (101), l'information provenant soit du capteur optique principal (120) et étant envoyée à l'élément (30), soit de l'information stockée par l'élément (30) concernant la nature de la première ligne (101) envoyée par le capteur optique secondaire (122) lors de la visualisation de la première ligne (101) par le capteur optique secondaire (122),

- comparaison (320) de la première information et de la seconde information par l'élément (30);

- détermination (340, 360, 370), par l'élément (30), de la vitesse de déplacement relatif du module optique (1) par rapport au document (10), la vitesse de déplacement relatif correspondant à la nature de la seconde ligne (102) à scanner par le capteur optique principal (120);

- envoi (380) d'une instruction au capteur optique principal, l'instruction étant issue de l'élément (30), pour la visualisation de la seconde ligne (102) au moment où la seconde ligne (102) passe au niveau de la première zone (11) du capteur optique principal (120) selon un mode de visualisation correspondant à la nature de la seconde ligne (102),

- envoi (380) d'une commande aux moyens de déplacement, la commande étant issue de l'élément (30), pour la visualisation (380) par le capteur optique principal (120) de la seconde ligne (102) avec la vitesse de déplacement relatif correspondant à la nature de la seconde ligne (102),

- la vitesse de déplacement relatif étant maximale lorsque la nature de la seconde ligne (102) est l'absence de signal (340),

- la vitesse de déplacement relatif étant intermédiaire lorsque la nature de la seconde ligne (102) est noir et blanc (360), et

- la vitesse de déplacement relatif étant minimale lorsque la nature de la seconde ligne (102) est couleur (370).

## FIG. 1

## FIG. 2

**FIG. 3**

**FIG. 4**

# FIG. 5

# FIG. 6

# FIG. 7

# FIG. 8

# FIG. 9

Europäisches
Patentamt

European
Patent Office

Office européen
des brevets

**RAPPORT DE RECHERCHE EUROPEENNE**

Numéro de la demande

EP 09 17 7660

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | US 5 568 270 A (ENDO AZUCHI [JP]) 22 octobre 1996 (1996-10-22) * colonne 4, ligne 27 - ligne 33 * * colonne 10, ligne 1 - colonne 11, ligne 2 * * colonne 11, ligne 41 - ligne 51 * * figure 2 * ----- | 1-2,4-8 | INV. H04N1/17 |
| X,D | US 2006/061835 A1 (INADA MASAKAZU [JP]) 23 mars 2006 (2006-03-23) * abrégé * * alinéa [0011] * * alinéa [0031] - alinéa [0040] * ----- | 1,5-8 | |
| X,D | US 5 483 359 A (YUMIBA TAKASHI [JP] ET AL) 9 janvier 1996 (1996-01-09) * figure 2 * * colonne 2, ligne 1 - ligne 26 * ----- | 1-2,5-8 | |
| A | US 2004/160651 A1 (HAKAMADA SUSUMU [JP]) 19 août 2004 (2004-08-19) * le document en entier * ----- | 1-8 | DOMAINES TECHNIQUES RECHERCHES (IPC) |
| A | US 5 278 675 A (KAMIYAMA AKIRA [JP]) 11 janvier 1994 (1994-01-11) * le document en entier * ----- | 1-8 | H04N |
| A | US 5 570 206 A (YOSHINAGA KENJI [JP]) 29 octobre 1996 (1996-10-29) * le document en entier * ----- | 1-8 | |

Le présent rapport a été établi pour toutes les revendications

| Lieu de la recherche | Date d'achèvement de la recherche | Examinateur |
|---|---|---|
| La Haye | 1 mars 2010 | Wunderlich, Doreen |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 17 7660

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

01-03-2010

| Document brevet cité au rapport de recherche | | Date de publication | Membre(s) de la famille de brevet(s) | | Date de publication |
|---|---|---|---|---|---|
| US 5568270 | A | 22-10-1996 | AUCUN | | |
| US 2006061835 | A1 | 23-03-2006 | JP | 2006093820 A | 06-04-2006 |
| US 5483359 | A | 09-01-1996 | JP | 7111561 A | 25-04-1995 |
| US 2004160651 | A1 | 19-08-2004 | AUCUN | | |
| US 5278675 | A | 11-01-1994 | US | 5381244 A | 10-01-1995 |
| US 5570206 | A | 29-10-1996 | JP | 6311315 A | 04-11-1994 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2900018
- US 5568270 A
- US 2006061835 A
- US 5483359 A